# EUROPÄISCHE PATENTSCHRIFT

(11) **EP 2 481 766 B1**
(45) Veröffentlichungstag und Bekanntmachung des Hinweises auf die Patenterteilung: **03.12.2014**
(21) Anmeldenummer: 11194795.8
(22) Anmeldetag: 21.12.2011
(51) Int. Cl.: C08G 77/46, C08G 18/08, C08J 9/00

(54) **Silikonpolyetherblock-Copolymere mit hochmolekularen Polyetherresten und deren Verwendung als Stabilisatoren zur Herstellung von Polyurethanschäumen**
Silicon polyether block copolymers with high-molecular polyether esters and use of same as stabilisers for production of polyurethane foams
Copolymères à bloc de silicone polyéther avec résidus de polyéther à haut poids moléculaire et leur utilisation comme stabilisateurs pour la fabrication de mousses de polyuréthane

(30) Priorität: 26.01.2011 DE 102011003150
(43) Veröffentlichungstag der Anmeldung: 01.08.2012
(73) Patentinhaber: Evonik Degussa GmbH, 45128 Essen (DE)
(72) Erfinder: Henning, Frauke, 45259 Essen (DE); Terheiden, Annegret, 46519 Alpen (DE); Hubel, Roland, 45136 Essen (DE); Schmitz, Sarah, 45130 Essen (DE); Schiller, Carsten, 45470 Mülheim an der Ruhr (DE); Schubert, Frank, 47506 Neukirchen-Vluyn (DE)

(56) Entgegenhaltungen:
- EP-A2- 0 585 771
- EP-B1- 0 992 523
- US-A1- 2003 203 984

## Beschreibung

Die vorliegende Erfindung betrifft Silikonpolyetherblock-Copolymer umfassend ein Polyorganosiloxan, welches mindestens einen Polyetherrest aufweist, wobei mindestens ein Polyetherrest vorhanden ist, der ein Molgewicht von größer-gleich 5000 g/mol aufweist, und das gewichtsmittlere Molgewicht aller an das Polyorganosiloxan chemisch gebundenen Polyetherreste größer 3000 g/mol beträgt, deren Herstellung und Verwendung sowie damit hergestellte Zusammensetzungen und Polymerartikel, insbesondere Polyurethanschaumartikel, jeweils nach Maßgabe der Ansprüche.

Polyurethane unterschiedlicher Art werden durch die Polymerisation von Diisocyanaten wie 4,4'-Methylenbis(phenylisocyanat), kurz MDI, oder 2,4-Toluoldiisocyanat, kurz TDI, mit Polyetherpolyolen oder Polyesterpolyolen hergestellt. Die hierbei eingesetzten Polyetherpolyole werden durch die Alkoxylierung von polyhydroxyfunktionellen Startern wie z.B. Glykolen, Glycerin, Trimethylolpropan, Pentaerythrit, Sorbit oder Saccharose gewonnen. Bei der Herstellung von Polyurethanschäumen kommen zusätzliche Treibmittel zum Einsatz, wie z. B. Pentan, Aceton, Methylenchlorid oder Kohlendioxid. Unerlässlich für die reproduzierbare technische Herstellung von Schaumteilen ist die Stabilisierung des Polyurethanschaums durch ein Tensid. Abseits von wenigen rein organischen Tensiden werden aufgrund ihres höheren Grenzflächenstabilisierungspotentials meist Silikontenside eingesetzt.

### Stand der Technik:

Eine Vielzahl verschiedener Polyurethanschäume, wie beispielsweise Heißweichschaum, Kaltschaum, Esterschaum, PUR-Hartschaum und PIR-Hartschaum sind bekannt. Die hierbei eingesetzten Stabilisatoren sind auf die jeweilige Endanwendung passgenau entwickelt und zeigen üblicherweise eine deutlich veränderte Performance, falls sie bei der Herstellung anderer Schaumarten eingesetzt werden.

Bei der Herstellung von Polyurethan- und Polyisocyanurat-Hartschaumstoffen werden zellstabilisierende Additive eingesetzt, um eine feinzellige, gleichmäßige und störungsarme Schaumstruktur zu erhalten und damit die Gebrauchseigenschaften - besonders das thermische Isolationsvermögen - des Hartschaumstoffes in wesentlichem Maße positiv zu beeinflussen. Auch hier sind Tenside auf der Basis von Polyether-modifizierten Siloxanen besonders effektiv und stellen daher den bevorzugten Typ der Zellstabilisatoren dar. Da es eine Vielzahl verschiedener Hartschaumformulierungen für unterschiedliche Anwendungsgebiete gibt, die individuelle Anforderungen an den Zellstabilisator stellen, werden Polyethersiloxane unterschiedlicher Struktur eingesetzt. So hat beispielsweise die Wahl des Treibmittels die Entwicklungen neuer, optimierter Stabilisatoren beeinflusst. Während die EP 0 570 174 A1 noch die Herstellung von Polyurethan-Hartschaum unter Verwendung von Fluorchlorkohlenwasserstoffen beschreibt, geht die weitere Entwicklung über reine Fluorkohlenwasserstoffe als Treibmittel, wie in der EP 0 533 202 A1 beschrieben zum heutzutage standardmäßig eingesetzten Treibmittel Pentan, wie in der EP 1 544 235 A1 beschrieben.

Polyurethanweichschäume werden häufig unter Verwendung von Kohlenstoffdioxid als umweltfreundlichem Treibmittel hergestellt. Die EP 0 797 606 A1 und EP 1 501 889 A1 beschreiben die für diese Anwendung gebräuchlichen Stabilisatoren. In Ländern mit weniger strikten Umweltauflagen wird dennoch nach wie vor Methylenchlorid als Treibmittel verwendet. Die EP 0 694 585 A2 beschreibt hier im Einsatz befindliche Stabilisatoren.

Im Stand der Technik werden die zur Polyurethanschaumstabilisierung verwendeten Polysiloxan-Polyoxyalkylen-Blockmischpolymerisate häufig durch edelmetallkatalysierte Hydrosilylierung von ungesättigten Polyoxyalkylenen mit SiH-funktionellen Siloxanen, sogenannten Wasserstoffsiloxanen, wie beispielsweise in der EP 1 520 870 beschrieben hergestellt. Die Hydrosilylierung kann batchweise oder kontinuierlich, wie beispielsweise in der DE 198 59 759 C1 beschrieben, durchgeführt werden.

Zur Herstellung von Polyurethan-Heißweichschaumstabilisatoren werden meist nichthydroxyfunktionelle Allylpolyether bei der Hydrosilylierung eingesetzt. Es handelt sich um sogenannte endverkappte Polyether, deren hydroxyfunktionelles Ende in einer Folgereaktion in eine Methylethergruppe oder auch ein Carbonsäureestergruppe umgewandelt wird. Weiterhin werden häufig Polyethergemische eingesetzt, die aus speziell definierten Einzelpolyethern mit genau eingegrenzten Eigenschaften hinsichtlich der Molmasse und Polarität zusammengesetzt sind.

So beschreibt beispielsweise die EP 0 600 261 Polysiloxan-Polyoxyalkylen-Blockmischpolymerisate, die unterschiedliche Polyoxyalkylenblöcke im durchschnittlichen Molekül aufweisen und Verwendung finden als Stabilisatoren für die Herstellung von flexiblen Polyurethanschäumen. Sehr genau umrissen wird nach der erfindungsgemäßen Lehre die Zusammmensetzung der im durchschnittlichen Silikonpolyether-Copolymer vertretenen Polyoxyalkylen- reste im Hinblick auf deren durchschnittliche Molgewichte, deren Ethylenoxid/Propylenoxid-Verhältnis und deren individuellen, prozentualen Anteil in der Gesamtmatrix angelagerter Polyether.

Aus der EP 0 585 771 A2 geht hervor, dass die Polysiloxan-Polyoxyalkylen-Blockmischpolymerisate, die besonders leistungsfähige Schaumstabilisatoren darstellen, durch eine nur empirisch zu ermittelnde Kombination aus hydroxyfunktionellen und endverkappten Polyoxyalkylenblöcken unterschiedlichen Molekulargewichts und unterschiedlicher Hydrophilie bzw. Lipophilie gekennzeichnet sind. Erst ein genau abgestimmtes Verhältnis von hydrophilen, lipophilen und silikonophilen Polymerblöcken verleiht dem Stabilisator in der jeweiligen Anwendung seine optimale Wirkung. Die Erfahrung lehrt, dass rohstoffbedingte Schwankungen der hydrophilen, lipophilen und silikonophilen Anteile im Polysiloxan-Polyoxyalkylen-Blockmischpolymerisat eine schlechtere Kompatibilisierung des Schaumstabilisators mit der reagierenden Polyurethanmatrix bewirken können, was eine homogene Verteilung des Tensids und die anschließende Migration zur Grenzfläche derart behindern kann, dass ein Schaumkollaps die unmittelbare Folge ist.

Eine Vielzahl weiterer Schriften, wie beispielsweise die EP 0 493 836 A1, US 5,565,194 oder EP 1 350 804 offenbart jeweils speziell zusammengesetzte Polysiloxan-Polyoxyalkylen-Blockmischpolymerisate zur Erfüllung spezifischer Anforderungsprofile für Schaumstabilisatoren in diversen Polyurethanschaumformulierungen. Dabei werden zur Herstellung der jeweiligen Stabilisatoren Gemische aus zwei oder drei bevorzugt endverkappten Allylpolyethern in der Hydrosilylierung eingesetzt, deren Molgewichte kleiner als 6000 g/mol, bevorzugt kleiner als 5500 g/mol, sind. Mittels alkalischer Alkoxylierung sind Polyether mit Molgewichten über 5500 g/mol nicht ohne weiteres zugänglich, da mit zunehmender Kettenlänge Nebenreaktionen dominieren, die den Kettenabbruch fördern.

Wie in US 5,856,369 und US 5,877,268 dargelegt, führt die hohe chemische Reinheit und die hohe Molmasse in Kombination mit geringer Polydispersität der mittels DMC-Katalysatoren hergestellten ungesättigten Polyetherole zu hochaktiven Polyurethanschaumstabilisatoren. Die Anwendbarkeit der beschriebenen meist Allylalkoholgestarteten Polyetherole auf dem Gebiet der PU-Schaumstabilisatoren beschränkt sich jedoch auf eine relativ kleine Gruppe von Polyetherolen, die aus Ethylenoxid- und Propylenoxid-Monomereinheiten in teils statistisch gemischter Abfolge bestehen und in denen der Ethylenoxidanteil nicht über 60 mol-% betragen darf, um die Entstehung von Polyethylenglykol-Blöcken in der Polymerkette zu vermeiden. Die Löslichkeit und damit auch die Wirksamkeit der dort beschriebenen Stabilisatoren sind demnach in Formulierungen mit hydrophileren Polyolen stark eingeschränkt. Neben der universellen Einsetzbarkeit in verschiedenen Formulierungen ist zudem das Verarbeitungsspiel ein wichtiger Faktor für die Güte eines Stabilisators. Ein breites Verarbeitungsspiel bedeutet, dass die Schaumeigenschaften bei Dosageschwankungen der Edukte konstant bleiben. Das Verarbeitungsspiel kann ermittelt werden, indem die Einsatzmengen von Stabilisator und Katalysator variiert werden. Wie dem Fachmann bekannt ist, weisen hochaktive Stabilisatoren, wie beispielsweise die in US 5,856,369 und US 5,877,268 beschriebenen Silikonpolyethercopolymeren, meist ein zu kleines Verarbeitungsspiel auf. Die Patentschriften US 5,856,369, US 5,877,268 und EP 0 712 884 belegen, dass die Verwendung besonders langkettiger Polyether im Polyoxyalkylenteil des Silikonpolyethercopolymer zu höherviskosen Produkten führt, die erst mit Lösungsmitteln abgedünnt werden müssen, um eine normale Handhabung zu gewährleisten. In diesen Schriften wird weiterhin der Parameter des molaren Mischungsmolgewichts des Polyethergemisches genannt, welches kleiner als 3000 g/mol, bevorzugt sogar kleiner 2000 g/mol ist, um zu hohe Viskositäten zu vermeiden und um offenzellige Polyurethanschäume zu gewährleisten. Bei den genannten niedrigen Mischungsmolgewichten ist offensichtlich, dass vergleichsweise geringe Anteile von Allylpolyethern mit Molgewichten über 5500 g/mol in der Mischung enthalten sind.

Insbesondere Polyurethanschaumformulierungen mit niedrigen Dichten stellen hohe Anforderungen an die Aktivität des Stabilisators sowie an dessen zellverfeinernde und zellöffnende Eigenschaften. Wie dem Fachmann bekannt ist, sind diese beiden gegensätzlichen Eigenschaften meist nur bis zu einem gewissen Grad miteinander vereinbar. Die US 2009-0253817 A1 beschreibt die Verwendung von Silikonpolyethercopolymeren, deren Polyethergemisch aus drei einzelnen Polyethern besteht, nämlich zwei endverkappten Allylpolyethern mit mittleren bis niedrigen Molgewichten im Bereich von 800 g/mol bis maximal 5500 g/mol und einem hydroxyfunktionellen Allylpolyether mit einem Molgewicht von 1400 g/mol bis 2300 g/mol. Wie die in dieser Schrift offenbarten Referenzbeispiele 2.1 und 2.2 zeigen, ist die hohe Aktivität dieser Stabilisatoren mit Einbußen bei der Offenzelligkeit verbunden.

Die Patentanmeldung CN 101099926 A beschreibt endverkappte nicht-ionische Tenside und deren Einsatz in einer nicht offenbarten Polyurethanschaumformulierung, mit der Schäume mittlerer bis niedriger Dichte hergestellt werden. Auch wenn in der Beschreibung prinzipiell die Verwendung endverkappter Polyether mit Molgewichten bis zu 9500 g/mol genannt ist, so beschreiben die offenbarten Beispiele lediglich die Verwendung von methylierten Allylpolyethern mit Molgewichten von 1000 bis 4500 g/mol. Wie die in dieser Schrift offenbarten Referenzbeispiele 2.3 und 2.4 zeigen, weisen die in der CN 101099926 offenbarten Stabilisatoren Nachteile auf, die in Schäumen niedriger Dichte entweder zu grober Zellstruktur oder aufgrund fehlender stabilisierender Eigenschaften direkt zum Schaumkollaps zu führen.

EP 0585771 A2 beschreibt Polysiloxan-Polyoxyalkylen-Blockmischpolymerisate mit unterschiedlichen Polyoxyalkylenblöcken im durchschnittlichen Molekül und deren Verwendung zur Herstellung von flexiblen Polyurethanschäumen. Bei der Verschäumung wird ein Gemisch aus Wasser und einem nicht näher spezifizierten Treibmittel verwendet.

US 2003/203984 A1 beschreibt Silicon-Tenside, die verschiedene Polyetherreste aufweisen können. Als Treibmittel wird Wasser in Kombination mit CO2 eingesetzt.

EP 0 992 523 B1 beschreibt ein Verfahren zur Herstellung eines Polyethers, umfassend (a) die Initiierung eines Doppelmetallcyanid-Katalysators mit Propylenoxid, wobei mindestens 2 bis 4 Prozent des Gesamt-Propylenoxids in die Reaktion einzuspeisen sind, sowie (b) gemischte Einspeisung von Propylenoxid und Ethylenoxid in einer solchen Menge zu dem initiierten Katalysator und Propylenoxid, dass Ethylenoxid bis zu 60 Gewichtsprozent des Einspeisungsstroms ausmacht, um eine Alkoxylierungsreaktion zu verursachen, wobei der Polyether mit einem monofunktionellen Alkohol gestartet ist.

Ausgehend vom Stand der Technik bestand die Aufgabe der vorliegenden Erfindung darin, universell einsetzbare Silikonpolyetherblock-Copolymere mit einem ausgewogenen Eigenschaftsprofil hinsichtlich der Polyurethanschaumstabilisierung und der Zellregulierung bereit zu stellen, deren Leistungsfähigkeit mit der etablierter Silikonpolyether-Copolymeren vergleichbar und in Formulierungen mit niedriger Raumdichte sogar überlegen ist.

Überraschenderweise wurde gefunden, dass diese Aufgabe durch die erfindungsgemäßen Silikonpolyetherblock-Copolymere, wie in den Ansprüchen definiert, gelöst wird.

Gegenstand der vorliegenden Erfindung sind deshalb, Silikonpolyetherblock-Copolymere umfassend ein Polyorganosiloxan welches mindestens einen Polyetherrest aufweist, wobei mindestens ein Polyetherrest vorhanden ist, der ein gewichtsmittleres Molgewicht von größer-gleich 5000 g/mol aufweist, und das gemittelte gewichtsmittlere Molgewicht aller an das Polyorganosiloxan chemisch gebundenen Polyetherreste größer 3000 g/mol beträgt, gemäß Anspruch 1, sowie ein Verfahren zu deren Herstellung, gemäß Anspruch 6.

Außerdem sind Gegenstand der vorliegenden Erfindung Zusammensetzungen enthaltend ein oder mehrere erfindungsgemäße Silikonpolyether-Copolymere gemäß Anspruch 7, die Verwendung eines erfindungsgemäßen Silikonpolyetherblock-Copolymers oder einer erfindungsgemäßen Zusammensetzung bei der Herstellung von Polyurethanschäumen, sowie Polyurethanschäume erhalten unter Verwendung eines erfindungsgemäßen Silikonpolyetherblock-Copolymers und Artikel enthaltend oder bestehend aus diesem erfindungsgemäßen Polyurethanschaum.

Weitere Gegenstände der Erfindung sind gekennzeichnet durch die Inhalte der Unteransprüche, deren Inhalt vollumfänglich Teil des Offenbarungsgehalts der vorliegenden Beschreibung ist.

Die erfindungsgemäßen Copolymere haben den Vorteil, dass Sie auf einfache Weise aus über DMC-Katalyse erhaltenen Allylpolyethern gewonnen werden können, so dass nur ein geringer Anteil an nicht verwertbarem Propenylpolyether erhalten wird.

Die erfindungsgemäßen Silikonpolyetherblock-Copolymeren haben den Vorteil, dass sie hochaktive PolyurethanschaumStabilisatoren darstellen, die bereits bei geringen Einsatzmengen eine gute Schaumstabilisierung und Zellfeinheit gewährleisten. Sofern die langkettigen Polyether mittels Doppelmetallcyanid-Katalysatoren hergestellt werden, haben die erfindungsgemäßen Silikonpolyetherblock-Copolymere weiterhin den Vorteil der kostengünstigen Herstellung, da die aufwändige Neutralisation des Polyethers nach der Alkoxylierung entfällt.

Die erfindungsgemäßen Silikonpolyetherblock-Copolymere haben weiterhin den Vorteil, dass sie bei geringer Einsatzmenge zur Herstellung von fein- und offenzelligen Polyurethanheißweich- und hartschäumen mit sehr niedrigen bis mittleren Dichten geeignet sind.

Die erfindungsgemäßen Copolymere haben außerdem den Vorteil, dass die Polyetherreste eine geringe Polydispersität, vorzugsweise Mw/Mn <= 1,5, aufweisen. Schwankungen in der Stabilisatorsynthese und in den Stabilisatoreigenschaften selbst können dadurch minimiert werden.

Die Verwendung der erfindungsgemäßen Silikonpolyetherblock-Copolymere führt zu Polyurethanschäumen, die leicht und dennoch feinzellig sind. Schäume mit niedriger Dichte eignen sich beispielsweise als leichte Verpackungsmaterialien zum Schutz von schlag- bzw. kratzempfindlichen hochwertigen Gütern, die zum Transport mit einem solchen Verpackungsschaum umpolstert werden.

Die erfindungsgemäßen Silikonpolyetherblock-Copolymere und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel.

Das nachfolgend angegebene gewichtsmittlere Molgewicht aller an das Polyorganosiloxan chemisch gebundenen Polyetherreste MG_{Mischung} ist definiert als die Summe der Produkte aus den molaren Anteilen des jeweiligen Polyetherrests in der Mischung, fₘₒₗₐᵣ, und dessen individuellen gewichtsmittleren Molgewicht, MW_{Polyether}. (Formel X)

MG_{Mischung} = Σ[fₘₒₗₐᵣ x M_{WPolyether}] Formel X

Die erfindungsgemäßen Silikonpolyetherblock-Copolymere, gemäß Anspruch 1, umfassen ein Polyorganosiloxan, welches mindestens einen Polyetherrest aufweist, zeichnen sich dadurch aus, dass im Mittel pro Silikonpolyetherblock-Copolymer-Molekül mindestens ein Polyetherrest vorhanden ist, der ein gewichtsmittleres Molgewicht von größer-gleich 5000 g/mol, vorzugsweise größer-gleich 5500 g/mol, bevorzugt größer-gleich 6000 g/mol aufweist, und das gewichtsmittlere Molgewicht aller mit dem Polyorganosiloxan zur Reaktion gebrachten bzw. an das Polyorganosiloxan chemisch gebundenen Polyetherreste größer 3000 g/mol, vorzugsweise größer 3500 g/mol ist.

Vorzugsweise sind in den erfindungsgemäßen Silikonpolyetherblock-Copolymeren mindestens ein Polyetherrest, der ein gewichtsmittleres Molgewicht von größer-gleich 5000 g/mol, bevorzugt größer-gleich 6000 g/mol aufweist, und mindestens ein Polyetherrest, der ein gewichtsmittleres Molgewicht von kleiner 5000 g/mol, bevorzugt kleiner 4500 g/mol aufweist, an das Polyorganosiloxan chemisch gebunden.

Bevorzugte erfindungsgemäße Silikonpolyetherblock-Copolymere sind solche, bei denen das gewichtsmittlere Molgewicht aller an das Polyorganosiloxan chemisch gebundenen Polyetherreste größer 3000 g/mol und kleiner 5000 g/mol beträgt.

Die erfindungsgemäßen Silikonpolyetherblock-Copolymere sind vorzugsweise solche, die der Formel (I) genügen: 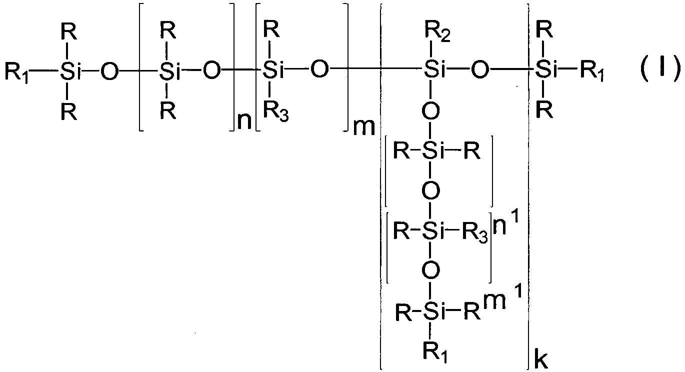 worin
n und n¹ unabhängig voneinander 0 bis 500, vorzugsweise 10 bis 200, insbesondere 15 bis 100 sind und (n+n¹) < 500, vorzugsweise < 200, insbesondere < 100 ist,
m und m¹ unabhängig voneinander 0 bis 60, vorzugsweise 0 bis 30, insbesondere 0,1 bis 25 sind und (m+m¹) < 60 ist, vorzugsweise < 30, insbesondere < 25 ist,
k = 0 bis 50 ist, vorzugsweise 0 bis 10 ist, insbesondere 0 oder von 1 bis 5 ist,
R = gleiche oder ungleiche Reste aus der Gruppe umfassend lineare, cyclische oder verzweigte, aliphatische oder aromatische, gesättigte oder ungesättigte Kohlenwasserstoffreste mit 1 bis zu 20 C-Atomen,
CH₂- R^{IV},
CH₂-CH₂-(O)ₓ'-R^{IV},
CH₂-CH₂-CH₂-O-CH₂-CH (OH) -CH₂OH, 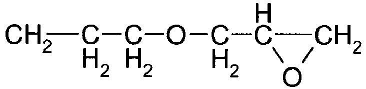 und CH₂-CH₂-CH₂-O-CH₂-C (CH₂OH)₂-CH₂-CH₃, mit
x' gleich 0 oder 1 und
R^{IV} ein gegebenenfalls substituierter, gegebenenfalls mit Halogenen substituierter Kohlenwasserstoffrest mit 1 bis 50 Kohlenstoffatomen,
wobei R vorzugsweise ein Methylrest ist, wobei besonders bevorzugt alle Reste R Methylreste sind,
R₁ = R oder R₃ ist,
R₂ = R oder R₃ oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R₃ = -Q-O-(CH₂-CH₂O-)ₓ-(CH₂-CH(R')O-)_{y}-(SO)_{z}-R"
   oder
-Q-O-(CH₂-CH₂O-)ₓ-(CH₂-CH(R')O-)_{y}-R",
   mit
Q = zweiwertiger Kohlenwasserstoffrest mit 2 bis 4 Kohlenstoffatomen, vorzugsweise Q = -CH₂-CH₂-CH₂- oder-CH₂-CH₂-
x = 0 bis 200, vorzugsweise 10 bis 100,
y = 0 bis 200, vorzugsweise 10 bis 100,
z = 0 bis 100, vorzugsweise 0 bis 10,
R' = eine unsubstituierte oder gegebenenfalls substituierte, beispielsweise mit Alkylresten, Arylresten oder Halogenalkyl- oder Halogenarylresten substituierte, Alkyl- oder Arylgruppe mit insgesamt 1 bis 12 C-Atomen, vorzugsweise eine Methyl- oder Ethylgruppe, bevorzugt eine Methylgruppe und
R" einen Wasserstoffrest oder eine Alkylgruppe mit 1 bis 4 C-Atomen, eine Gruppe -C(O)-R"' mit R"' = Alkylrest, eine Gruppe -CH₂-O-R', eine Alkylarylgruppe, wie z. B. eine Benzylgruppe, die Gruppe -C(O)NH-R', die Gruppe C(O)-OR', vorzugsweise einen Wasserstoffrest oder einen Methyl- oder Acetylrest bedeutet,
SO ein Styroloxid-Rest -CH(C₆H₅)-CH₂-O- ist,
mit der Maßgabe, dass mindestens ein Rest R₃ vorhanden ist und dass mindestens ein Rest R₃ ein Polyetherrest mit einem gewichtsmittleren Molgewicht größer-gleich 5000 g/mol ist und das gewichtsmittlere Molgewicht MG gemäß Formel (X) aller im Copolymer der Formel (I) enthaltenen Polyetherreste R₃ mehr als 3000 g/mol beträgt, und n + n¹ + m + m¹ größer-gleich 10, vorzugsweise 15 und bevorzugt größer-gleich 20 ist.

Die verschiedenen Monomereinheiten der Polyorganosiloxankette und auch der Polyoxyalkylenkette können untereinander blockweise aufgebaut sein oder einer statistischen Verteilung unterliegen. Die in den hier angeführten Formeln wiedergegebenen Indexzahlen und die Wertbereiche der angegebenen Indizes verstehen sich daher als die Mittelwerte der möglichen statistischen Verteilung der tatsächlichen isolierten Strukturen und/oder deren Mischungen.

Es kann vorteilhaft sein, wenn bei allen Polyetherresten R₃ mit einem gewichtsmittleren Molgewicht größer-gleich 5000 g/mol R" gleich Wasserstoff ist. Es kann außerdem vorteilhaft sein, wenn bei allen Polyetherresten R₃ mit einem gewichtsmittleren Molgewicht kleiner 5000 g/mol R" ungleich Wasserstoff ist. Bevorzugt ist bei allen Polyetherresten R₃ mit einem gewichtsmittleren Molgewicht größer-gleich 5000 g/mol R" gleich Wasserstoff und bei allen Polyetherresten R₃ mit einem gewichtsmittleren Molgewicht kleiner 5000 g/mol R" ungleich Wasserstoff. Es versteht sich von selbst, dass bei technischen Produkten mit Reinheitsgraden unter 100% geringfügige Anteile an prozessimmanenten Nebenprodukten enthalten sein können und dass die chemischen Ausbeuten > 90% idealerweise > 98% sind, häufig jedoch nicht exakt 100% sind. So können endverkappte Polyether geringe Anteile der hydroxyfunktionellen Vorprodukte enthalten.

Die erfindungsgemäßen Silikonpolyetherblock-Copolymere sind erhältlich durch Organomodifizierung von verzweigten oder linearen Polyorganosiloxanen mit endständigen und/oder seitenständigen SiH-Funktionen, mit einem Polyethergemisch aus mindestens zwei Polyethern, wobei das eingesetzte Polyethergemisch mindestens einen Polyether mit einem gewichtsmittleren Molgewicht größer-gleich 5000 g/mol enthält und das mittlere Molgewicht MG gemäß Formel (X) aller eingesetzten Polyether größer 3000 g/mol ist, wobei bevorzugt solche Polyether eingesetzt werden, die eine Vinylendgruppe enthaltende Endgruppe, insbesondere eine Allylgruppe, enthalten.

Die erfindungsgemäßen Silikonpolyetherblock-Copolymere können auf verschiedene Weise unter Verwendung von aus dem Stand der Technik bekannten Verfahrensschritten erhalten werden.

Das erfindungsgemäße Verfahren zur Herstellung von Silikonpolyetherblock-Copolymeren, bei dem verzweigte oder lineare Polyorganosiloxane mit endständigen und/oder seitenständigen SiH-Funktionen, mit einem Polyethergemisch aus mindestens zwei Polyethern umgesetzt werden entspricht Anspruch 6. In einer bevorzugten Ausführungsform zeichnet es sich dadurch aus, dass das eingesetzte Polyethergemisch mindestens ein(en) Polyether mit einem gewichtsmittleren Molgewicht größer-gleich 5999 g/mol und bevorzugt 6999 g/mol enthält und das mittlere Molgewicht aller eingesetzten Polyether größer 3499 g/mol ist. Als Polyether kommen vorzugsweise solche zum Einsatz, die eine Vinylendgruppe enthaltende Endgruppe, insbesondere eine Allylgruppe, enthalten.

Die Umsetzung wird vorzugsweise als edelmetallkatalysierte Hydrosilylierung, bevorzugt wie in der EP 1 520 870 beschrieben durchgeführt.

In dem erfindungsgemäßen Verfahren werden vorzugsweise Polyorganosiloxane mit endständigen und/oder seitenständigen SiH-Funktionen, der Formel (II) eingesetzt, 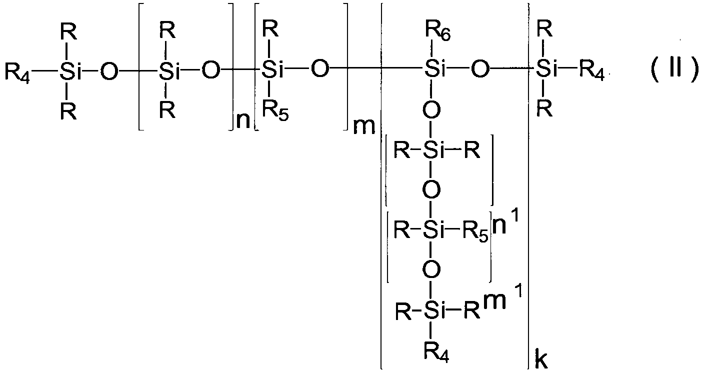 worin
n und n¹ unabhängig voneinander 0 bis 500, vorzugsweise 10 bis 200, insbesondere 15 bis 100 sind und (n+n¹) < 500, vorzugsweise < 200, insbesondere < 100 ist,
m und m¹ unabhängig voneinander 0 bis 60, vorzugsweise 0 bis 30, insbesondere 0,1 bis 25 sind und (m+m¹) < 60, vorzugsweise < 30, insbesondere < 25 ist,
k = 0 bis 50, vorzugsweise 0 bis 10 und insbesondere 0 oder 1 bis 5 ist,
   - R: wie oben definiert
   - R₄: unabhängig voneinander Wasserstoff oder R ist,
   - R₅: unabhängig voneinander Wasserstoff oder R ist,
   - R₆: unabhängig voneinander Wasserstoff, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
mit der Maßgabe, dass mindestens einer der Reste R₄, R₅ und R₆ ein Wasserstoff ist.

Die bei der Herstellung der Polysiloxan-Polyoxyalkylen-Blockmischpolymerisate verwendeten Polyorganosiloxane mit endständigen und/oder seitenständigen SiH-Funktionen der Formel (II) können wie im Stand der Technik, beispielsweise in der EP 1439200 B1 und DE 10 2007 055485 A1 beschrieben, hergestellt werden.

Die verwendeten ungesättigten Polyoxyalkylene (Polyether mit einer Vinyl-, insbesondere Allylendgruppe) können nach dem literaturbekannten Verfahren der alkalischen Alkoxylierung von einem eine Vinylgruppe aufweisenden Alkhohol, insbesondere Allylalkohol, oder unter Verwendung von DMC-Katalysatoren wie im Stand der Technik, beispielsweise in der DE 10 2007 057145 A1 beschrieben, hergestellt werden.

Bevorzugt eingesetzte ungesättigte Polyoxyalkylene sind solche der Formel (III)

Q'-O-(CH₂-CH₂O-)ₓ-(CH₂-CH(R')O-)_{y}-(SO)_{z}-R'' (III)

Q' = CH₂=CH-CH₂- oder CH₂=CH- und SO, R', R", x, y und z wie oben definiert, mit der Maßgabe, dass die Summe aus x+y+z ungleich 0 ist und vorzugsweise so gewählt wird, dass die oben genannten gewichtsmittleren Molekulargewichte erreicht werden.

Die erfindungsgemäßen Silikonpolyether-Copolymere können für die verschiedensten Zwecke verwendet werden. Insbesondere können die erfindungsgemäßen Silikonpolyether-Copolymere zur bzw. bei der Herstellung von Polyurethanen, insbesondere Polyurethanschäumen verwendet werden.

Bevorzugte Zusammensetzungen enthalten ein oder mehrere erfindungsgemäße Silikonpolyether-Copolymere und zeichnen sich dadurch aus, dass sie des weiteren eine oder mehrere bei der Herstellung von Polyurethanschäumen verwendbare Substanzen, ausgewählt aus Polyol, Nukleierungsmitteln, zellverfeinernden Additiven, Zellöffnern, Vernetzern, Emulgatoren, Flammschutzmitteln, Antioxidantien, Antistatika, Bioziden, Farbpasten, festen Füllstoffen, Katalysatoren, insbesondere Aminkatalysatoren und/oder Metallkatalysatoren und Puffersubstanzen, enthält. Es kann vorteilhaft sein, wenn die erfindungsgemäße Zusammensetzung ein oder mehrere Lösungsmittel, vorzugsweise ausgewählt aus Glykolen, Alkoxylaten oder Ölen synthetischer und/oder natürlicher Herkunft, enthält.

Die erfindungsgemäßen Silikonpolyetherblock-Copolymere oder die erfindungsgemäßen Zusammensetzungen werden vorzugsweise bei der Herstellung von Polyurethanschäumen verwendet. Das erfindungsgemäße Silikonpolyetherblock-Copolymer wird vorzugsweise als Schaumstabilisator eingesetzt. Die erfindungsgemäßen Silikonpolyetherblock-Copolymeren, insbesondere solche der Formel (I) eignen sich besonders bevorzugt als Polyurethanschaumstabilisatoren bei der Herstellung von beispielsweise Polyurethan-Weichschaum, -Heißweichschaum, -Hartschaum, -Kaltschaum, -Esterschaum, viscoelastischem Weichschaum oder auch High Resilience-Schaum (HR-Schaum), ganz besonders bevorzugt als Polyurethan-Heißweichschaumstabilisatoren.

Vorzugsweise werden die erfindungsgemäßen Silikonpolyetherblock-Copolymere oder die erfindungsgemäßen Zusammensetzungen in Verfahren zur Herstellung von Polyurethanschaum verwendet, bei denen Wasser, Methylenchlorid, Pentan, Alkane, halogenierte Alkane, Aceton und/oder Kohlendioxid, vorzugsweise Wasser, Pentan oder Kohlendioxid als Treibmittel, eingesetzt wird.

Der erfindungsgemäße Polyurethanschaum wird unter Verwendung eines erfindungsgemäßen Silikonpolyetherblock-Copolymers erhalten. Mit dem erfindungsgemäßen Polyurethanschaum sind Artikel zugänglich, die diesen Polyurethanschaum enthalten oder aus ihm bestehen. Solche Artikel können z. B. Möbelpolster, Kühlschrankisolierungen, Sprühschäume, Metallverbundelemente für die (Bau-)Isolierung, Matratzen oder Autositze sein. Die Auflistungen sind als überlappend anzusehen und als nicht abschließend zu verstehen.

Die Herstellung der erfindungsgemäßen Polyurethanschäume kann mit im Stand der Technik bekannten Formulierungen und Verfahrensweisen erfolgen.

Der Gegenstand der vorliegenden Erfindung wird nachfolgend an Hand von Beispielen näher erläutert, ohne dass der Gegenstand der Erfindung auf diese beispielhaften Ausführungsformen beschränkt sein soll.

### Beispiele

### Beispiel 1: Herstellung von Polyethersiloxanen

### Beispiel 1a: Herstellung von Polyethern

Die Herstellung der Polyether erfolgt gemäß den bekannten Methoden des Standes der Technik. Die Bestimmung der Molgewichte Mₙ und M_{w} erfolgt durch Gelpermeationschromatographie unter den folgenden Messbedingungen: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

Verwendete Polyether gemäß Formel (III) jeweils mit Q = CH₂=CH-CH₂- und R' = -CH₃:
PE1: R" = H, z = 0, x = 16, y = 12, M_{w} = 1459 g/mol
PE2: R" = C(O)-CH₃, z = 0, x - 16, y = 12, M_{w} = 1484 g/mol
PE3: R" = C(O)-CH₃, z = 0, x = 40, y = 30, M_{w} = 3832 g/mol
PE4: R" = H, z = 0, x = 57, y = 60, Mₙ = 5226 g/mol, M_{w} = 6872 g/mol
PE5: R" = CH₃, z = 0, x = 17.7, y = 23.6, M_{w} = 2206 g/mol
PE6: R" = CH₃, z = 0, x = 47, y = 49, M_{w} = 4983 g/mol PE7: R" = H, z = 0, x = 78, y = 81, Mₙ = 7032 g/mol, M_{w} = 9871 g/mol
PE8 : R" = C(O)-CH₃, z = 0, x = 10, y = 16, M_{w} = 1373 g/mol

### Beispiel 1b: Herstellung von Wasserstoffsiloxanen

Die Herstellung der Wasserstoffsiloxane erfolgt wie in der EP 1439200 B1 im Beispiel 1 beschrieben. Die verwendeten Wasserstoffsiloxane sind gemäß Formel (II) wie folgt definiert.
SIL1: R₄ = R = CH₃, R₅ = H, k = 0, n = 70, m = 5
SIL2: R₄ = R = CH₃, R₅ = H, k = 0, n = 69, m = 8
SIL3: R₄ = R = CH₃, R₅ = H, k = 0, n = 89, m = 6,5
SIL4: R₄ = R = CH₃, R₅ = H, k = 0, n = 74, m = 4,0

### Beispiel 1c: Herstellung von Polyethersiloxanen

Die Herstellung der in Tabelle 1 und Tabelle 2 aufgeführten Polyethersiloxane erfolgt wie in der WO 2009/065644 in Beispiel 7 beschrieben.

**Tabelle 1: Erfindungsgemäße Silikonpolyetherblock-Copolymere**

| Beispiel Nr. | Siloxan | Menge | Einwaagen der einzelnen Polyether | | | MG_{Mischung} | Aussehen des Polyethersiloxans |
|---|---|---|---|---|---|---|---|
| 1.1 | SIL3 | 41,0 g | 11,7 g PE2 | 33,4 g PE8 | 146,1 g PE4 | 3898 g/mol | leicht trüb |
| 1.2 | SIL3 | 39,0 g | 11,0 g PE2 | 31,4 g PE8 | 155,2 g PE7 | 4295 g/mol | leicht trüb |
| 1.3 | SIL4 | 41,0 g | 127,6 g PE7 | 35,6 g PE1 | | 4372 g/mol | leicht trüb |

**Tabelle 2: Nicht erfindungsgemäße Silikonpolyetherblock-Copolymere**

| Beispiel Nr. | Siloxan | Menge | Einwaagen der einzelnen Polyether | | | MG_{Mischung} | Aussehen des Polyethersiloxans |
|---|---|---|---|---|---|---|---|
| V.1 | SIL1 | 63,2 g | 19,2 g PE1 | 62,0 g PE2 | 105,6 g PE3 | 2264 g/mol | klar |
| V.2 | SIL1 | 63,2 g | 38,3 g PE1 | 42,9 g PE2 | 105,6 g PE3 | 2258 g/mol | klar |
| V.3 | SIL2 | 40,0 g | 104,3 g PE5 | 138,4 g PE6 | - | 3227 g/mol | Klar |
| V.4 | SIL2 | 40,0 g | 132,5 g PE5 | 74,8 g PE6 | - | 2761 g/mol | Klar |

### Beispiel 2: Herstellung von Polyurethanschäumen niedriger Dichte

Zur Herstellung der Polyurethanschäume niedriger Dichte wurde folgende Rezeptur verwendet: 100 Gew.-Teile Polyetherol (Hydroxylzahl = 56 mg KOH/g), 11 Gew.-Teile Wasser, 10 Gew.-Teil Silikonstabilisator (gemäß Tabelle 3), 0,9 Gew.-Teile eines tertiären Amins, 140 Gew.-Teile Toluoldiisocyanat T 80 (Index 122), 90 Gew.-Teile Methylenchlorid, sowie 1 Gew.-Teil an KOSMOS® 29 (Evonik Goldschmidt GmbH).

Bei der Verschäumung wurden 80 g Poly(ether-)ol eingesetzt, die anderen Formulierungsbestandteile wurden entsprechend umgerechnet.

Zur Verschäumung wurden das Polyol, Wasser, Amin, Zinnkatalysator und Silikonstabilisator unter Rühren gut vermischt. Nach gleichzeitiger Zugabe von Methylenchlorid und Isocyanat wurde mit einem Rührer 7 Sek. bei 2500 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

Vergleichend wurden Schäume niedriger Dichte unter Verwendung eines konventionellen Stabilisators hergestellt, welcher durchaus zur Verschäumung in niedrigen Dichten geeignet ist, jedoch lediglich Polyether mit Molekulargewicht < 4000 g/mol aufweist.

### Beispiel 3: Physikalische Eigenschaften der Schäume

Die in Beispiel 2 hergestellten Schäume wurden anhand folgender physikalischer Eigenschaften beurteilt:
a) Steigzeit:
   Zeitdifferenz zwischen Eingießen der Eduktmischung und Abblasen des Polyurethanschaumstoffes.
b) Rücksacken des Schaumstoffes nach dem Ende der Steigphase (= Rückfall):
   Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der
   Schaumkuppe gemessen.
c) Schaumhöhe:
   Die Endhöhe des Schaumes wird dadurch bestimmt, dass der Rückfall bzw. das Nachsteigen von bzw. zu der Schaumhöhe nach dem Abblasen subtrahiert bzw. addiert wird.
d) Zellstruktur:
   Eine horizontale 0,8 cm dicke Schaumscheibe wird 10 cm vom Boden des Schaumkörpers herausgeschnitten und visuell mit fünf Standardschaumscheiben verglichen, die verschiedene Zellstrukturqualitäten aufweisen. Die Kennzeichnung 1 beschreibt starke Vergröberung insbesondere im Randbereich, während die Kennzeichnung 5 eine regelmäßige, feine Zelle wiedergibt.

Die Ergebnisse sind in Tabelle 3 zusammengefasst.

**Tabelle 3: Ergebnisse zur Beispiel 3**

| Stabili -sator | Steigzeit [s] | Rückfall [cm] | Schaumhöhe [cm] | Zellstruktur Bewertung |
|---|---|---|---|---|
| B 8110 | 90 | 2,6 | 33,8 | 2 - 3 |
| 1.1 | 92 | 1,0 | 37,1 | 3 - 4 |
| 1.2 | 95 | 1,2 | 36,7 | 4 - 5 |
| V.1 | 101 | 1,0 | 35,9 | 3 |
| V.2 | 94 | 0,1 | 37,5 | 3 - 4 |
| V.3 | 110 | 1,1 | 33,4 | 2 - 3 |
| V.4 | 117 | - | - | Kollaps |

Wie aus Tabelle 3 ersichtlich ist, verbessert sich die Zellstruktur gravierend durch Verwendung von Schaumstabilisatoren mit gewichtsmittlerem Molgewicht > 3000 g/mol (Stabilisator gemäß Beispiel 1.1 bzw. 1.2). Die Verwendung von Polyethern eines Molekulargewichts um 8000 g/mol lässt es zu, Stabilisatoren herzustellen, die die Schaumqualität erheblich verbessern und eine Bewertung von 4 bis 5 erhalten. Zudem wird der Rückfall des Schaumes bei der Verwendung langkettiger Polyether drastisch reduziert und dadurch eine bessere Schaumausbeute erhalten. Dies spricht ebenfalls für eine verbesserte Stabilisierungseigenschaft der neuartigen Strukturen insbesondere für Verschäumungen in niedriger Dichte.

### Beispiel 4: Herstellung von Polyurethan-Verpackungschaum

Für den anwendungstechnischen Vergleich von erfindungsgemäßen und konventionellen Schaumstabilisatoren wurde die in Tabelle 4 angegebene Schaumformulierung eines Polyurethan-Verpackungsschaumes verwendet.

**Tabelle 4: Formulierungen des Verpackungsschaumes**

| Komponente | Einsatzmenge (Massenteile) |
|---|---|
| Daltolac R 251* | 52 Teile |
| Voranol CP 3322** | 23 Teile |
| Desmophen PU 21IK01*** | 20 Teile |
| Polyethylenglycol 600 | 5 Teile |
| N,N-Dimethylaminoethoxyethanol | 2,5 Teile |
| Wasser | 35 Teile |
| | |
| Schaumstabilisator | 1 Teil |
| | |
| Desmodur 44V20L^{‡‡} | 226 Teile |

| | |
|---|---|
| * Polyetherpolyol der Firma Huntsman ** Polyetherpolyol der Firma DOW *** Polyetherpolyol der Firma Bayer ^{‡‡} polymeres MDI der Firma Bayer, 200 mPa*s, 31,5% NCO, Funktionalität 2,7 | |

Die Durchführung der Vergleichsverschäumungen erfolgte im Handmischverfahren. Dazu wurden Polyole, Katalysatoren, Wasser, Zellöffner und konventioneller bzw. erfindungsgemäßer Schaumstabilisator in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 5 s bei 2500 Upm verrührt und sofort in eine nach oben offene Holzkiste von 27 cm x 27 cm Grundfläche und 27 cm Höhe überführt, welche mit Papier ausgekleidet war. Nach 10 min wurden die Schaumstoffe entformt und analysiert. Die Zellstruktur wurden subjektiv anhand einer Skala von 1 bis 10 beurteilt, wobei 10 einen sehr feinzelligen und ungestörten Schaum und 1 einen groben, extrem stark gestörten Schaum repräsentiert. Der prozentuale Volumenanteil an offenen Zellen wurde mit einem Gerät vom Typ AccuPyc 1330 der Firma Micromeritics bestimmt. Die Dichte wurde durch Abwiegen eines 10 cm x 10 cm x 10 cm großen Schaumwürfels bestimmt.

Die verwendeten Schaumstabilisatoren und die zugehörigen Verschäumungsergebnisse sind in Tabelle 5 zusammengestellt.

**Tabelle 5: Ergebnisse Verpackungsschaum**

| Stabilisator | Zellstruktur | Dichte [kg/m³] |
|---|---|---|
| Bsp. 1.3 | 5 | 6,8 |
| B 8863Z* | 4 | 7,1 |

| | | |
|---|---|---|
| * nicht erfindungsgemäßes Vergleichsbeispiel; konventioneller Schaumstabilisator der Firma Evonik Goldschmidt GmbH | | |

Die Ergebnisse belegen, dass mit den erfindungsgemäßen Schaumstabilisatoren Polyurethan-Verpackungsschaum mit guter Zellstruktur und vergleichsweise wenigen Schaumdefekten hergestellt werden kann.

### Beispiel 5: Herstellung von Polyurethan-Sprühschaum mit niedriger Dichte

Für den anwendungstechnischen Vergleich von erfindungsgemäßen und konventionellen Schaumstabilisatoren wurden die in Tabelle 6 angegebene Schaumformulierung eines rein Wasser-getriebenen Sprüh-Leichtschaums verwendet.

**Tabelle 6: Formulierung des Sprühschaumes**

| Komponente | Einsatzmenge (Massenteile) |
|---|---|
| Rizinus-Öl | 25,0 Teile |
| Stepan PS 1922* | 7,5 Teile |
| Jeffol R-470 X** | 7,0 Teile |
| Tris(1-chlor-2-propyl)phosphat | 20,0 Teile |
| PHT-4-Diol*** | 10,0 Teile |
| Tegoamine BDE^{‡} | 3,0 Teile |
| Tegoamine 33^{‡} | 2,5 Teile |
| Tegoamine DMEA^{‡} | 3,0 Teile |
| Wasser | 19,0 Teile |
| Stabilisator | 3,0 Teile |
| | |
| Rubinate M^{‡‡} | 100 Teile |

| | |
|---|---|
| * Polyesterpolyol der Firma Stepan ** Mannich-Basen-gestartetes Polyether-Polyol der Firma Huntsman *** Flammschutzmittel der Firma Chemtura ^{‡} Amin-Katalysatoren der Firma Evonik Goldschmidt GmbH ^{‡‡} polymeres MDI der Firma Huntsman, 190 mPa*s, 31.2% NCO, Funktionalität 2.7 | |

Die Durchführung der Vergleichsverschäumungen erfolgte im Handmischverfahren. Dazu wurden Polyole, Katalysatoren, Wasser, Flammschutzmittel und konventioneller bzw. erfindungsgemäßer Schaumstabilisator in einen Becher eingewogen und mit einem Tellerrührer (6 cm Durchmesser) 30 s bei 1000 Upm vermischt. Jetzt wurde das MDI zugegeben, die Reaktionsmischung mit dem beschriebenen Rührer 2 s bei 3000 Upm verrührt und der Schaum anschließend im Mischbecher aufsteigen gelassen.

Nach 10 min Aushärtezeit wurde der Schaumstoff analysiert. Die Zellstruktur wurden subjektiv anhand einer Skala von 1 bis 10 beurteilt, wobei 10 einen sehr feinzelligen und ungestörten Schaum und 1 einen groben, extrem stark gestörten Schaum repräsentiert. Der prozentuale Volumenanteil an offenen Zellen wurde mit einem Gerät vom Typ AccuPyc 1330 der Firma Micromeritics bestimmt. Die Dichte wurde durch Abwiegen eines 10 cm x 10 cm x 10 cm großen Schaumwürfels bestimmt.

Alle verwendeten Schaumstabilisatoren und die zugehörigen Verschäumungsergebnisse sind in Tabelle 7 zusammengestellt.

**Tabelle 7: Ergebnisse der Sprühschäume**

| Stabilisator | Zellstruktur | Offenzelligkeit [%] | Dichte [kg/m³] |
|---|---|---|---|
| Bsp. 1.3 | 8 | 84 | 9,3 |
| B 1048* | 7 | 88 | 11,1 |

| | | | |
|---|---|---|---|
| * nicht erfindungsgemäßes Vergleichsbeispiel; konventioneller Schaumstabilisator der Firma Evonik Goldfschmidt | | | |

Mit dem erfindungsgemäßen Schaumstabilisator wird die eine niedrigere Schaumdichte und die bessere Zellstruktur bei gleich guter Offenzelligkeit erreicht, wodurch die hohe Aktivität der erfindungsgemäßen Schaumstabilisatoren zum Ausdruck kommt.

## Patentansprüche

1. Silikonpolyetherblock-Copolymer umfassend ein Polyorganosiloxan, welches mindestens einen Polyetherrest aufweist, **dadurch gekennzeichnet, dass** mindestens ein Polyetherrest vorhanden ist, der ein gewichtsmittleres Molgewicht von größer-gleich 5000 g/mol aufweist, und das gewichtsmittlere Molgewicht aller an das Polyorganosiloxan chemisch gebundenen Polyetherreste größer 3000 g/mol beträgt, wobei das gewichtsmittlere Molgewicht aller an das Polyorganosiloxan chemisch gebundenen Polyetherreste MG_{Mischung} definiert ist als die Summe der Produkte aus den molaren Anteilen des jeweiligen Polyetherrests in der Mischung, fₘₒₗₐᵣ, und dessen individuellen gewichtsmittleren Molgewicht, Mw_{polyether} wie in Formel X angegeben,
MG_{M}i_{schung} = Σ [fₘₒₗₐᵣ x Mw_{polyether}] Formel X,
erhältlich durch Organomodifizierung von verzweigten oder linearen Polyorganosiloxanen mit endständigen und/oder seitenständigen SiH-Funktionen, mit einem Polyethergemisch aus mindestens zwei Polyethern, wobei das Polyethergemisch mindestens einen Polyether mit einem Molgewicht größer-gleich 5000 g/mol enthält und das gewichtsmittlere Molgewicht aller eingesetzten Polyether größer 3000 g/mol ist.

2. Silikonpolyetherblock-Copolymer nach Anspruch 1, **dadurch gekennzeichnet, dass** mindestens ein Polyetherrest, der ein gewichtsmittleres Molgewicht von größer-gleich 5000 g/mol aufweist, und mindestens ein Polyetherrest, der ein gewichtsmittleres Molgewicht von kleiner 5000 g/mol aufweist, an das Polyorganosiloxan chemisch gebunden sind.

3. Silikonpolyetherblock-Copolymer nach einem der vorhergehenden Ansprüche, **dadurch gekennzeichnet, dass** es der Formel (I) genügt, 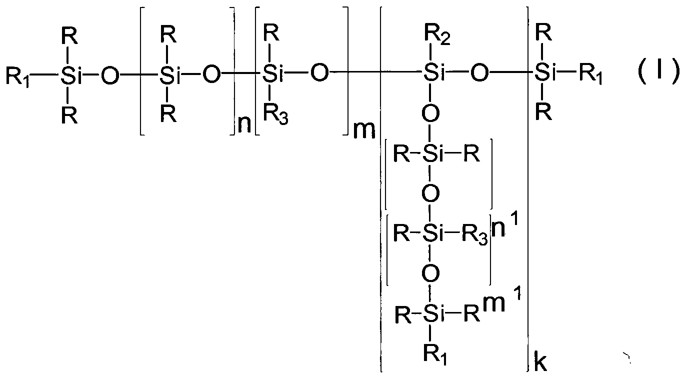 worin
n und n¹ unabhängig voneinander 0 bis 500 sind und (n+n¹) < 500,
m und m¹ unabhängig voneinander 0 bis 60 sind und (m+m¹) < 60 ist,
k 0 bis 50 ist,
R gleiche oder ungleiche Reste aus der Gruppe umfassend lineare, cyclische oder verzweigte, aliphatische oder aromatische, gesättigte oder ungesättigte Kohlenwasserstoffreste mit 1 bis zu 20 C-Atomen,
CH₂- R^{IV},
CH₂-CH₂-(O)ₓ'-R^{IV},
CH₂-CH₂-CH₂-O-CH₂-CH(OH) -CH₂OH, 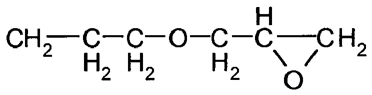 und
CH₂-CH₂-CH₂-O-CH₂-C(CH₂OH)₂-CH₂-CH₃,
mit
x' gleich 0 oder 1 und
R^{IV} ein gegebenenfalls substituierter, gegebenenfalls mit Halogenen substituierter Kohlenwasserstoffrest mit 1 bis 50 Kohlenstoffatomen, wobei R vorzugsweise ein Methylrest ist, wobei besonders bevorzugt alle Reste R Methylreste sind,
R₁ R oder R₃ ist,
R₂ R oder R₃ oder ein mit Heteroatomen substituierter, funktioneller, organischer, gesättigter oder ungesättigter Rest, vorzugsweise ausgesucht aus der Gruppe der Alkyl-, Chloralkyl- , Chloraryl-, Fluoralkyl-, Cyanoalkyl-, Acryloxyaryl-, Acryloxyalkyl-, Methacryloxyalkyl- , Methacryloxypropyl- oder Vinyl-Reste, besonders bevorzugt ein Methyl-, Chlorpropyl-, Vinyl- oder ein Methacryloxypropyl-Rest ist,
R₃ -Q-O-(CH₂-CH₂O-)ₓ-(CH₂-CH(R'O-)_{y}-(SO)_{z}-R'' oder
-Q-O-(CH₂-CH₂O-)ₓ-(CH₂-CH(R')O-)_{y}-R",
mit
Q = zweiwertiger Kohlenwasserstoffrest mit 2 bis 4 Kohlenstoffatomen, vorzugsweise Q = -CH₂-CH₂-CH₂- oder -CH₂-CH₂-
x = 0 bis 200,
y = 0 bis 200,
z = 0 bis 100,
R' eine unsubstituierte oder gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist und
R" einen Wasserstoffrest oder eine Alkylgruppe mit 1 bis 4 C-Atomen, eine Gruppe -C(O)-R'" mit R"' = Alkylrest, eine Gruppe -CH₂-O-R', eine Alkylarylgruppe, wie z. B. eine Benzylgruppe, die Gruppe -C(O)NH-R' bedeutet,
SO ein Styroloxid-Rest -CH(C₆H₅)-CH₂-O- ist,
mit der Maßgabe, dass mindestens ein Rest ein Rest R₃ ist und dass mindestens ein Rest R₃ ein Polyetherrest mit einem gewichtsmittleren Molgewicht größer-gleich 5000 g/mol ist und das gewichtsmittlere Molgewicht aller im Copolymer der Formel (I) enthaltenen Polyetherreste R₃ mehr als 3000 g/mol beträgt, und n + n¹ + m + m¹ größer-gleich 15 ist.

4. Silikonpolyether-Copolymer nach Anspruch 3, **dadurch gekennzeichnet, dass** für alle Polyetherreste R₃ mit einem gewichtsmittleren Molgewicht größer-gleich 5000 g/mol R" gleich Wasserstoff ist.

5. Silikonpolyether-Copolymer nach Anspruch 3 oder 4, **dadurch gekennzeichnet, dass** für alle Polyetherreste R₃ mit einem gewichtsmittleren Molgewicht kleiner 5000 g/mol R" ungleich Wasserstoff ist.

6. Verfahren zur Herstellung von Silikonpolyetherblock-Copolymeren nach einem der vorhergehenden Ansprüche, bei dem verzweigte oder lineare Polyorganosiloxane mit endständigen und/oder seitenständigen SiH-Funktionen, mit einem Polyethergemisch aus mindestens zwei Polyethern umgesetzt werden, **dadurch gekennzeichnet, dass** das eingesetzte Polyethergemisch mindestens ein(en) Polyether mit einem Molgewicht größer-gleich 5000 g/mol enthält und das gewichtsmittlere Molgewicht aller eingesetzten Polyether größer 3000 g/mol ist.

7. Zusammensetzungen enthaltend ein oder mehrere Silikonpolyether-Copolymere nach mindestens einem der Ansprüche 1 bis 5, **dadurch gekennzeichnet, dass** die Zusammensetzung des weiteren eine oder mehrere bei der Herstellung von Polyurethanschäumen verwendbare Substanzen, ausgewählt aus Nukleierungsmitteln, zellverfeinernden Additiven, Zellöffnern, Vernetzern, Kettenverlängerern Emulgatoren, Flammschutzmitteln, Antioxidantien, UV-Stabilisatoren, Antistatika, Bioziden, Farbpasten, festen Füllstoffen, Aminkatalysatoren, Metallkatalysatoren und Puffersubstanzen, enthält.

8. Zusammensetzungen nach Anspruch 7, **dadurch gekennzeichnet, dass** sie ein oder mehrere Lösungsmittel, vorzugsweise ausgewählt aus Glykolen, Alkoxylaten oder Ölen synthetischer und/oder natürlicher Herkunft, enthält.

9. Verwendung eines Silikonpolyetherblock-Copolymers nach zumindest einem der Ansprüche 1 bis 5 oder einer Zusammensetzung nach Anspruch 7 oder 8 bei der Herstellung von Polyurethanschäumen.

10. Verwendung nach Anspruch 9, **dadurch gekennzeichnet, dass** das Silikonpolyetherblock-Copolymer als Schaumstabilisator eingesetzt wird.

11. Verwendung nach Anspruch 9 oder 10, **dadurch gekennzeichnet, dass** bei der Herstellung des Polyurethanschaums Wasser, Methylenchlorid, Pentan, Alkan, halogeniertes Alkan, Aceton oder Kohlendioxid als Treibmittel eingesetzt wird.

12. Polyurethanschaum erhalten durch Verwendung eines Silikonpolyetherblock-Copolymers gemäß zumindest einem der Ansprüche 1 bis 5.

13. Artikel enthaltend oder bestehend aus einem Polyurethanschaum gemäß Anspruch 12.

## Claims

1. Silicone-polyether block copolymer comprising a polyorganosiloxane which includes at least one polyether residue, **characterized in that** at least one polyether residue present has a weight average molecular weight of not less than 5000 g/mol and **in that** the weight average molecular weight of all polyether residues attached to the polyorganosiloxane by chemical bond is above 3000 g/mol, wherein weight average molecular weight of all polyether residues attached to the polyorganosiloxane by a chemical bond - MW_{blend} - is defined as the sum total of the products formed from the molar fractions of the respective polyether residue in the blend, fₘₒₗₐᵣ, and its individual weight average molecular weight, Mw_{polyether}, as specified in formula X,
M_{blend} Σ[fₘₒₗₐᵣ M _{polyether}] formula X,
obtainable by organomodification of branched or linear polyorganosiloxanes having terminal and/or lateral SiH functions, with a polyether mixture of two or more polyethers, wherein the polyether mixture contains at least one polyether having a molecular weight not less than 5000 g/mol and the weight average molecular weight of all polyethers used is above 3000 g/mol.

2. Silicone-polyether block copolymer according to Claim 1, **characterized in that** at least one polyether residue having a weight average molecular weight of not less than 5000 g/mol and at least one polyether residue having a weight average molecular weight of below 5000 g/mol are attached to the polyorganosiloxane by chemical bond.

3. Silicone-polyether block copolymer according to either preceding claim, **characterized in that** it conforms to formula (I) 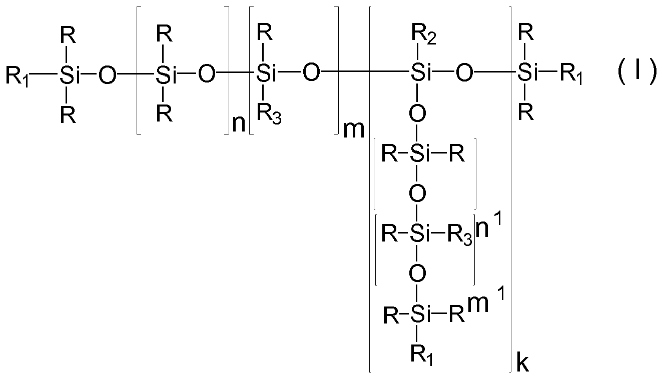 where
n and n¹ are each independently from 0 to 500 and (n+n¹) is < 500,
m and m¹ and m¹ are each independently from 0 to 60 and (m+m¹) is < 60,
k is from 0 to 50,
R represents alike or unalike radicals from the group comprising linear, cyclic or branched, aliphatic or aromatic, saturated or unsaturated hydrocarbon radicals having from 1 up to 20 carbon atoms, CH₂- R^{IV},
CH₂-CH₂-(O)ₓ'-R^{IV},
CH₂-CH₂-CH₂-O-CH₂-CH (OH) -CH₂OH, 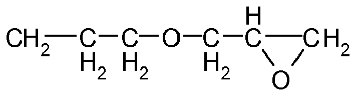 and
CH₂-CH₂-CH₂-O-CH₂-C(CH₂OH)₂-CH₂-CH₃,
where
x' is 0 or 1 and
R^{IV} is an optionally substituted, optionally halogen-substituted hydrocarbon radical having 1 to 50 carbon atoms,
R₁ wherein R is preferably a methyl radical, wherein all R radicals are more preferably methyl radicals, is R or R₃,
R₂ is R or R₃ or a heteroatom-substituted, functional, organic, saturated or unsaturated radical, preferably selected from the group of alkyl, chloroalkyl, chloroaryl, fluoroalkyl, cyanoalkyl, acryloyloxyaryl, acryloyloxyalkyl, methacryloyloxyalkyl, methacryloyloxypropyl or vinyl radicals, more preferably is a methyl, chloropropyl, vinyl or methacryloyloxypropyl radical,
R₃ is -Q-O-(CH₂-CH₂O-)ₓ-(CH₂-CH(R')O-)_{y}-(SO)_{z}-R''
or
-Q-O-(CH₂-CH₂O-)ₓ-(CH₂-CH(R')O-)_{y}-R'',
where
Q = divalent hydrocarbon radical having 2 to 4 carbon atoms, preferably Q = -CH₂-CH₂-CH₂- or -CH₂-CH₂-
x = 0 to 200,
y = 0 to 200,
z = 0 to 100,
R' is an alkyl or aryl group which has 1 to 12 carbon atoms and is unsubstituted or optionally substituted, for example with alkyl radicals, aryl radicals or haloalkyl or haloaryl radicals, and
R" is a hydrogen radical or an alkyl group having 1 to 4 carbon atoms, a -C(O)-R"' group where R"' = alkyl, a -CH₂-O-R' group, an alkylaryl group, e.g. benzyl, the -C(O)NH-R' group,
SO is a styrene oxide radical -CH(C₆H₅)-CH₂-O-, with the proviso that at least one radical is an R₃ radical and that at least one R₃ radical is a polyether residue having a weight average molecular weight not less than 5000 g/mol and the weight average molecular weight of all polyether residues R₃ in the copolymer of formula (I) is more than 3000 g/mol, and n + n¹ + m + m¹ is not less than 15.

4. Silicone-polyether copolymer according to Claim 3, **characterized in that** R" is hydrogen for all polyether residues R₃ having a weight average molecular weight not less than 5000 g/mol.

5. Silicone-polyether copolymer according to Claim 3 or 4, **characterized in that** R" is other than hydrogen for all polyether residues R₃ having a weight average molecular weight below 5000 g/mol.

6. Process for production of silicone-polyether block copolymers according to any preceding claim, which comprises branched or linear polyorganosiloxanes having terminal and/or lateral SiH functions being reacted with a polyether mixture of two or more polyethers, **characterized in that** the polyether mixture used contains at least one polyether having a molecular weight not less than 5000 g/mol and the weight average molecular weight of all polyethers used is above 3000 g/mol.

7. Compositions containing one or more silicone-polyether copolymers according to one or more of Claims 1 to 5, **characterized in that** the composition further contains one or more substances useful in polyurethane foam production and selected from nucleating agents, cell-refining additives, cell openers, crosslinkers, chain extenders, emulsifiers, flame retardants, antioxidants, UV stabilizers, antistats, biocides, colour pastes, solid fillers, amine catalysts, metal catalysts and buffer substances.

8. Compositions according to Claim 7, **characterized in that** they contain one or more solvents, preferably selected from glycols, alkoxylates or oils of synthetic and/or natural origin.

9. Use of a silicone-polyether block copolymer according to one or more of Claims 1 to 5 or a composition according to Claim 7 or 8 in the production of polyurethane foams.

10. Use according to Claim 9, **characterized in that** the silicone-polyether block copolymer is used as foam stabilizer.

11. Use according to Claim 9 or 10, **characterized in that** the polyurethane foam is produced using water, methylene chloride, pentane, alkane, halogenated alkane, acetone or carbon dioxide as blowing agent.

12. Polyurethane foam obtained using a silicone-polyether block copolymer according to one or more of Claims 1 to 5.

13. Article containing or consisting of a polyurethane foam according to Claim 12.

## Revendications

1. Copolymère séquencé silicone-polyéther comprenant un polyorganosiloxane, qui comprend au moins un radical polyéther, **caractérisé en ce qu'**au moins un radical polyéther présentant un poids moléculaire moyen en poids supérieur ou égal à 5 000 g/mol est présent, et le poids moléculaire moyen en poids de tous les radicaux polyéther reliés chimiquement au polyorganosiloxane est supérieur à 3 000 g/mol, le poids moléculaire moyen en poids de tous les radicaux polyéther reliés chimiquement au polyorganosiloxane MG_{mélange} étant défini comme la somme des produits des proportions molaires des radicaux polyéther respectifs dans le mélange, fₘₒₗₐᵢᵣₑ, et de leurs poids moléculaires moyens en poids individuels, Mw_{polyether}, tel qu'indiqué par la formule X
MG_{mélange} = Σ[fₘₒₗₐᵢᵣₑ x Mw_{polyéther}] Formule X
pouvant être obtenu par modification organique de polyorganosiloxanes ramifiés ou linéaires comprenant des fonctions SiH terminales et/ou latérales avec un mélange de polyéthers constitué d'au moins deux polyéthers, le mélange de polyéthers contenant au moins un polyéther ayant un poids moléculaire supérieur ou égal à 5 000 g/mol et le poids moléculaire moyen en poids de tous les polyéthers utilisés étant supérieur à 3 000 g/mol.

2. Copolymère séquencé silicone-polyéther selon la revendication 1, **caractérisé en ce qu'**au moins un radical polyéther qui présente un poids moléculaire moyen en poids supérieur ou égal à 5 000 g/mol et au moins un radical polyéther qui présente un poids moléculaire moyen en poids inférieur à 5 000 g/mol sont reliés chimiquement au polyorganosiloxane.

3. Copolymère séquencé silicone-polyéther selon l'une quelconque des revendications précédentes, **caractérisé en ce qu'**il satisfait la formule (I) 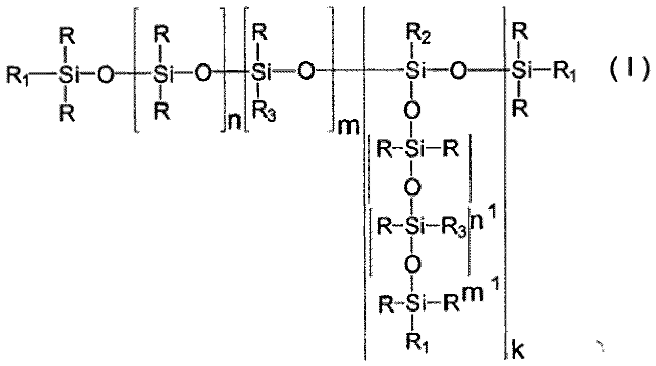 dans laquelle
n et n¹ sont indépendamment l'un de l'autre de 0 à 500 et (n+n¹) < 500,
m et m¹ sont indépendamment l'un de l'autre de 0 à 60 et (m+m¹) < 60,
k est de 0 à 50,
les R représentent
des radicaux identiques ou différents du groupe comprenant les radicaux hydrocarbonés linéaires, cycliques ou ramifiés, aliphatiques ou aromatiques, saturés ou insaturés, contenant 1 à 20 atomes C,
CH₂-R^{IV},
CH₂-CH₂-(O)ₓ'-R^{IV},
CH₂-CH₂-CH₂-O-CH₂-CH(OH) -CH₂OH, 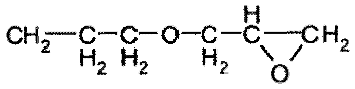 et
CH₂-CH₂-CH₂-O-CH₂-C(CH₂OH)₂-CH₂-CH₃,
avec
x' représentant 0 ou 1, et
R^{IV} étant un radical hydrocarboné éventuellement substitué, éventuellement substitué avec des halogènes, contenant 1 à 50 atomes de carbone,
R étant de préférence un radical méthyle, tous les radicaux R étant de manière particulièrement préférée des radicaux méthyle,
R₁ représente R ou R₃,
R₂ représente R ou R₃ ou un radical fonctionnel, organique, saturé ou insaturé, substitué avec des hétéroatomes, de préférence choisi dans le groupe des radicaux alkyle, chloroalkyle, chloroaryle, fluoroalkyle, cyanoalkyle, acryloxyaryle, acryloxyalkyle, méthacryloxyalkyle, méthacryloxypropyle ou vinyle, de manière particulièrement préférée un radical méthyle, chloropropyle, vinyle ou méthacryloxypropyle,
R₃ représentant
-Q-O-(CH₂-CH₂O-)ₓ-(CH₂-CH(R')O-)_{y}-(SO)_{z}-R''
ou
-Q-O-(CH₂-CH₂O-)ₓ-(CH₂-CH(R') O-)_{y}-R''
avec
Q = radical hydrocarboné bivalent contenant 2 à 4 atomes de carbone, de préférence Q = -CH₂-CH₂-CH₂- ou -CH₂-CH₂- ,
x = 0 à 200,
y = 0 à 200,
z = 0 à 100,
R' étant un groupe alkyle ou aryle de 1 à 12 atomes C, non substitué ou éventuellement substitué, par exemple avec des radicaux alkyle, des radicaux aryle ou des radicaux halogénoalkyle ou halogénoaryle,
et
R" signifiant un radical hydrogène ou un groupe alkyle de 1 à 4 atomes C, un groupe -C(O)-R"' avec R"' = radical alkyle, un groupe -CH₂-O-R', un groupe alkylaryle, tel que p. ex. un groupe benzyle, le groupe -C(O)NH-R",
SO étant un radical oxyde de styrène -CH(C₆H₅)-CH₂-O-,
à condition qu'au moins un radical soit R₃ et qu'au moins un radical R₃ soit un radical polyéther d'un poids moléculaire moyen en poids supérieur ou égal à 5 000 g/mol, et que le poids moléculaire moyen en poids de tous les radicaux polyéther R₃ contenus dans le copolymère de formule (I) soit supérieur à 3 000 g/mol, et que n + n¹ + m + m¹ soit supérieur ou égal à 15.

4. Copolymère de silicone-polyéther selon la revendication 3, **caractérisé en ce que**, pour tous les radicaux polyéther R₃ d'un poids moléculaire moyen en poids supérieur ou égal à 5 000 g/mol, R" représente l'hydrogène.

5. Copolymère de silicone-polyéther selon la revendication 3 ou 4, **caractérisé en ce que**, pour tous les radicaux polyéther R₃ d'un poids moléculaire moyen en poids inférieur à 5 000 g/mol, R" ne représente pas l'hydrogène.

6. Procédé de fabrication de copolymères séquencés silicone-polyéther selon l'une quelconque des revendications précédentes, selon lequel des polyorganosiloxanes ramifiés ou linéaires comprenant des fonctions SiH terminales et/ou latérales sont mis en réaction avec un mélange de polyéthers constitué d'au moins deux polyéthers, **caractérisé en ce que** le mélange de polyéthers utilisé contient au moins un polyéther ayant un poids moléculaire supérieur ou égal à 5 000 g/mol et le poids moléculaire moyen en poids de tous les polyéthers utilisés est supérieur à 3 000 g/mol.

7. Compositions contenant un ou plusieurs copolymères silicone-polyéther selon au moins l'une quelconque des revendications 1 à 5, **caractérisées en ce que** la composition contient en outre une ou plusieurs substances utilisables lors de la fabrication de mousses de polyuréthane, choisies parmi les agents de nucléation, les additifs d'affinement cellulaire, les agents d'ouverture cellulaire, les agents de réticulation, les allongeurs de chaîne, les émulsifiants, les agents ignifuges, les antioxydants, les stabilisateurs UV, les antistatiques, les biocides, les pâtes d'impression, les charges solides, les catalyseurs aminés, les catalyseurs métalliques et les substances tampon.

8. Compositions selon la revendication 7, **caractérisées en ce qu'**elles contiennent un ou plusieurs solvants, de préférence choisis parmi les glycols, les alcoxylates ou les huiles d'origine synthétique et/ou naturelle.

9. Utilisation d'un copolymère séquencé silicone-polyéther selon au moins l'une quelconque des revendications 1 à 5 ou d'une composition selon la revendication 7 ou 8 pour la fabrication de mousses de polyuréthane.

10. Utilisation selon la revendication 9, **caractérisée en ce que** le copolymère séquencé silicone-polyéther est utilisé en tant que stabilisateur de mousse.

11. Utilisation selon la revendication 9 ou 10, **caractérisée en ce que** de l'eau, du chlorure de méthylène, du pentane, un alcane, un alcane halogéné, de l'acétone ou du dioxyde de carbone est utilisé en tant qu'agent gonflant lors de la fabrication de la mousse de polyuréthane.

12. Mousse de polyuréthane obtenue en utilisant un copolymère séquencé silicone-polyéther selon au moins l'une quelconque des revendications 1 à 5.

13. Article contenant ou constitué par une mousse de polyuréthane selon la revendication 12.
